# EUROPEAN PATENT APPLICATION

(11) **EP 1 571 050 A1**
(43) Date of publication of application: **07.09.2005**
(21) Application number: 03777396.7
(22) Date of filing: 09.12.2003
(51) Int. Cl.: B60R 21/26

(54) **GAS GENERATOR FOR AIR BAG**

(30) Priority: 09.12.2002 JP 2002356703; 20.06.2003 JP 2003176323
(71) Applicant: DAICEL CHEMICAL INDUSTRIES, LTD., Osaka 590-8501 (JP)
(72) Inventor: MATSUDA, Naoki, Himeji-shi, Hyogo 671-1262 (JP); HIROOKA, Masato, Shisou-gun, Hyogo 671-2415 (JP); YAMAZAKI, Masayuki, Himeji-shi, Hyogo 671-1262 (JP)
(74) Representative: Grünecker, Kinkeldey, Stockmair & Schwanhäusser Anwaltssozietät
(86) International application number: PCT/JP2003/015726
(87) International publication number: WO 2004/052694

(57) **Abstract**

The present invention provides a gas generator for an air bag capable of easily adjusting a volume ratio of two combustion chambers while reducing the gas generator in size.

A diameter of an inner cylinder 15 disposed in a housing 11 is increased and reduced depending upon its vertical position. Thus, the volume ratio of the first combustion chamber 20 and the second combustion chamber 25 can be changed without changing the height of the housing 11 itself.

## Description

### Technical Field to which the Invention Belongs

The present invention relates to a gas generator for an air bag for protecting a passenger from the impact.

### Prior Art

A gas generator for an air bag incorporated in an air bag system mounted in an automobile needs to adjust the inflation pressure of the air bag by, for example, securing appropriate output in view of protection of a passenger. The adjustment of output is important especially for a dual type gas generator having two combustion chambers.

When the output is adjusted in the dual type gas generator, combination of gas generating agents having different amount and composition can be considered, but if the structure of the gas generator is largely changed in accordance with the change of such combination, a technical burden at the producing site is great and this also increases the manufacturing cost.

Further, the gas generator for an air bag is always required to be small in both size and weight. Therefore, even when the structure of the gas generator is changed, it is necessary to take the requirement of reduction in size and weight into consideration as well.

In case of using a gas generating agent having a low combustion temperature, since its ignitability is generally poor, it is necessary to secure reliability of operation. In USP6, 189, 927, a first combustion chamber 234 is disposed in a space formed by housings 214 and 216, and further a second combustion chamber 296 is disposed therein. The second combustion chamber 296 is partitioned by a partition wall 284, a lid 285 is fitted into an opening 302, and the lid 285 is detached when the gas generating agent in the second combustion chamber is burnt. However, there is no disclosure in this publication as to an idea that this opening adjusts the flammability of the gas generating agent in the second combustion chamber.

Besides, JP-A No.2001-97175 and No.10-324219 are prior arts related to the present invention.

### Disclosure of the Invention

It is an object of the present invention to provide a gas generator for an air bag in which reliability of operation at the time of operation is secured, an amount of NOx or the like to be generated is reduced, a gas can be cleaned and further flammability of a gas generating agent is enhanced.

As solving means of the problem, the present invention provides a gas generator for an air bag comprising a housing having a gas discharge hole, first and second ignition means activated by the impact, and first and second combustion chambers accommodating therein gas generating agents which are ignited and burnt to generate a combustion gas, wherein
the first combustion chamber and the second combustion chamber are separated from each other by a partition wall, a volume ratio of the first combustion chamber and the second combustion chamber is adjusted in the range of 1/1 to 9/1 by the partition wall. The volume ratio of the first combustion chamber and the second combustion chamber is preferably 3/2 to 8/2.

The volume ratio is adjusted by improving only the partition wall which separates the first combustion chamber and the second combustion chamber from each other or improving only another part such as a retainer which serves the same function as that of the partition wall, and thereby, it is possible to easily handle the output variation caused by composition variation (variation in combustion temperature) of the gas generating agent.

In order to adjust the inflation mode of the air bag in accordance with collision state of a vehicle and then to protect a passenger appropriately, the first ignition means is first activated and the second ignition means is activated with a slight time lag in the gas generator for an air bag in some cases. In such an activation state, the internal pressure of the air bag at the time of inflation may be different depending upon the combustion temperature of the gas generating agent to be used.

### (1) When a gas generating agent having a high combustion temperature is used.

The gas generating agent in the first combustion chamber is burnt and heat of the generated high temperature combustion gas (referred to as "first combustion gas" for the sake of convenience) is absorbed by another member (especially coolant/filter for cooling the combustion gas) in the housing, and the temperature of the combustion gas is lowered and then, the gas flows into the air bag to inflate the same.

Then, when the gas generating agent in the second combustion chamber is burnt to generate a high temperature combustion gas (referred to as "second combustion gas" for the sake of convenience), the coolant filter is already absorbed the heat and its temperature is high, so that the heat of the second combustion gas is not absorbed as much as the first combustion gas. The second combustion gas flows into the air bag at higher temperature than the first combustion gas to inflate the air bag. Thus, the internal pressure in the air bag becomes high.

### (2) When a gas generating agent having a low combustion temperature is used.

Heat of high temperature combustion gas (referred to as "first combustion gas" for the sake of convenience) generated by combustion of the gas generating agent in the first combustion chamber is absorbed by another member in the housing (especially coolant/filter which cools the combustion gas) and its temperature is lowered and then, the combustion gas flows into the air bag to inflate the same. At that time, as the combustion temperature is low, the heat absorbing amount of the coolant-filter is smaller correspondingly as compared with the case (1).

Then, the gas generating agent in the second combustion chamber is burnt and a high temperature combustion gas (referred to as "second combustion gas" for the sake of convenience) is generated. At this time, since a remaining amount of the heat absorbing volume (cooling volume) of the coolant/filter or the like is greater as compared with the case (1), the heat of the second combustion gas is absorbed more as compared with the case (1). As a result, the second combustion gas flows into the air bag in a relatively low temperature state and inflates the air bag. Thus, as compared with the case (1), the internal pressure of the air bag becomes low.

Thus, in order to compensate the reduction of the internal pressure and reduction of output of the air bag in the case (2) and to secure the same internal pressure of the air bag as that of the case (1), a method for increasing a generation amount of combustion gas (mole number of generated gas) is considered. In this case, if the volume ratio of the first combustion chamber and the second combustion chamber is adjusted and the mole number of generated gas is adjusted while making the charging amount of the gas generating agent in each combustion chamber different, such a decrease of the internal pressure in the air bag in the case of (2) can be avoided. From such a point of view, and further from a point of view of reducing the size of the gas generator itself, the present invention provides means for easily adjusting the volume ratio of the first combustion chamber and the second combustion chamber.

In the gas generator for an air bag of the present invention, it is preferable that an inner cylinder is disposed in the housing, the annular first combustion chamber is provided outside the inner cylinder, two ignition means are provided in a lower portion in the inner cylinder, and further the second combustion chamber is provided in an upper portion in the inner cylinder.

In the gas generator for an air bag of the present invention, it is preferable that a diameter of the inner cylinder disposed in the housing varies at a vertical position in the axial direction of the housing.

In the gas generator for an air bag of the present invention, it is preferable that a diameter of the inner cylinder disposed in the housing varies at a vertical position in the axial direction of the housing. Preferably, an upper portion of the inner cylinder is greater than a lower portion of the inner cylinder in diameter, but the diameter of the upper portion may be smaller than that of the lower portion.

The inner cylinder is used as the partition wall which separates the first combustion chamber and the second combustion chamber from each other, and the diameter of the inner cylinder is made different depending upon its height position. Thus, it is possible to easily change the volume ratio of the first combustion chamber and the second combustion chamber while reducing the gas generator in size without changing the height of the gas generator itself.

As the solving means, the present invention provides a gas generator for an air bag comprising a housing having a gas discharge hole, first and second ignition means which are activated by the impact, and first and second combustion chambers accommodating therein gas generating agents which are ignited and burnt to generate a combustion gas, wherein
the first combustion chamber and the second combustion chamber are separated from each other by separating means having a communication hole, the second combustion chamber is disposed such that it is enclosed by the first combustion chamber,
flammability of the second combustion chamber is adjusted by the communication hole.

Here, the expression that the second combustion chamber is enclosed by the first combustion chamber means a case in which part or all of the side wall of the second combustion chamber is in the first combustion chamber, a case in which part or all of the ceiling wall of the second combustion chamber is in the first combustion chamber, and a case in which part or all of the second combustion chamber and part or all of the ceiling wall are in the first combustion chamber.

In order to reliably burn the gas generating agent, it is necessary to control the combustion internal pressure. Generally, in a gas generator having plural combustion chambers in which one of them (e.g., second combustion chamber) is enclosed in the other one of the combustion chambers (e.g., first combustion chamber) and both the combustion chambers are in communication with each other through a communication hole, a gas generated from the second combustion chamber passes through the first combustion chamber and is discharged outside. Thus, the flammability of the gas generating agent is adjusted by the gas discharge ports formed in the housing.

However, when an impact at the time of collision is small and the air bag is developed only by combustion of the first gas generating agent, it is necessary to completely burn the unburnt second gas generating agent (including transfer charge and priming which become the second ignition means) because of subsequent dumping problem of the air bag system (mainly gas generator).

In this case, the second ignition means is activated with about 100 msec delay after the first ignition means is activated, and unburnt second gas generating agent and second ignition means (transfer charge and priming) are completely burnt. At this stage, however, since a gas from the first gas generating agent has been completely discharged from the housing, the internal pressure in the housing is reduced to a level close to the atmospheric pressure. If the flammability of the second gas generating agent is not adjusted at this time, a gas such as NOx is generated due to pressure shortage in some cases.

An example of the method to adjust the flammability of the gas generating agent is to adjust the combustion internal pressure. More specifically, this can be achieved by correlating the surface area of the gas generating agent and the opening diameter of the gas discharging nozzle. However, generally, an amount of first burnt gas generating agent (fist gas generating agent) may be the greater. When the opening area of the gas discharge port is correlated with the surface area of the first gas generating agent, this opening area is larger than the surface area of the second gas generating agent. Thereby, when the second gas generating agent is burnt with delay, the combustion internal pressure is not increased.

For this reason, if the communication hole serving as a nozzle correlated with the surface area of the second gas generating agent is opened as in the present invention, the combustion internal pressure can be increased also in the above case, the operation is stabilized and the gas can be cleaned.

Generally, the amount of the second gas generating agent is smaller than the amount of the first gas generating agent, and even if the second gas generating agent is ignited and burnt with 100 msec delay as described above, a gas generated therefrom does not substantially inflate the air bag, and thus, there is no possibility that this hurts a passenger.

According to the present invention, in the above invention, a gas generator for an air bag is provided, in which a retainer is disposed in the second combustion chamber, the communication hole and the gas generating agent are separated from each other by the retainer such that the communication hole and the gas generating agent do not come into contact with each other.

Here, it is preferable that the retainer is a wire mesh. The mesh size of the wire mesh is set in such a range that a gas generated by combustion of the gas generating agent can smoothly flow and the gas generating agent does not leak from the mesh.

In case of the gas generating agent contacting the communication hole, the gas generating agent in the vicinity of the communication hole is not yet burnt at the initial stage although the gas generating agent in the vicinity of the ignition means starts burning at this time, and thereby, a gas produced by the burnt gas generating agent can hardly pass through the communication hole. Accordingly, by separating the gas generating agent and the communication hole from each other, the gas can flow smoothly.

According to the present invention, in the above inventions, a gas generator for an air bag is provided, in which the number of gas discharge ports formed in the housing is two or more, the gas discharge ports are closed with shielding members before the gas generator is activated, the shielding members are ruptured in many stages after the gas generator is activated.

The expression that the shielding members are ruptured in many stages means that the shielding members which close plural gas discharge ports are ruptured with time delays, and that the gas discharge ports are opened with time delays. A preferable shielding member is one covered with a metal tape such as an aluminum tape or stainless tape with adhesive for closing the gas discharge port and is fixed with the same.

As methods for rupturing the shielding members in many stages, the following methods can be employed:
(1) a method in which opening diameters of the gas discharge ports are made different and the ports are closed with a shielding means having the same specification (thickness, material and the like);
(2) a method in which opening diameters of the gas discharge ports are made the same and the ports are closed with a shielding means having the different specification (thickness, material and the like ); and
(3) a method in which both opening diameters of the gas discharge ports and shielding means are different.
   By using any of the methods (1) to (3), when the shielding members are ruptured in many stages, the operation output of the gas generator, influenced by a combustion internal pressure which varies depending upon environment temperature at ignition and combustion of the gas generator, can be averaged.
   When the operation under a high temperature in the summer is compared with the operation under a low temperature in the winter, the output (or housing internal pressure) in the winter is lower than that in the summer, but if the shielding members are ruptured in many stages in accordance with the combustion internal pressure, a difference in the operation output (housing internal pressure) caused by a difference in temperature can be reduced, and a gas generator having a stable performance can be provided.
   As other methods for rupturing the shielding members in many stages, the following methods can be employed:
(4) a method in which gas discharge ports having opening areas correlated with the gross surface area of the first gas generating agent (gas generating agent which is burnt first) are provided, and the gas discharge port are closed with the shielding means;
(5) a method in which gas discharge ports having opening areas correlated with the gross surface area of the second gas generating agent (gas generating agent which is burnt later) are provided, and the gas discharge port are closed with the shielding means.

By employing both or one of the methods (4) and (5), when the shielding members are ruptured in many stages, the operation output of the gas generator caused by difference in combustion internal pressure in the housing generated by environment temperature when the gas generator is ignited and burnt can be averaged.

Gas generating agents in a plurality of (two, for example) combustion chambers are ignited and burnt by respective ignition means. In this case, if the shielding members are ruptured in many stages by combustion of the respective gas generating agents, e.g., if one of the shielding members is ruptured by combustion of a gas generating agent in one of combustion chambers and the other shielding member is ruptured by combustion of a gas generating agent in the other combustion chamber, the operation output can be adjusted by adjusting the combustion internal pressure neither too much nor too less in any igniting mode (e.g., two ignition means are ignited simultaneously or one of them is ignited with a time delay), and it is possible to provide a gas generator having stable performance.

In the case of the gas discharge ports described in the methods (4) and (5), in addition to the opening areas correlated with the surface areas of the gas generating agents, it is possible to further provide gas discharge ports having larger or smaller opening areas, the gas discharge ports can be opened in many stages. Thus, it is possible to adjust the output more finely and to reduce a difference in output caused by a temperature at the time of activation.

As another solving means of the problem, the invention provides a gas generator for an air bag comprising a housing having a gas discharge hole, first and second ignition means activated by the impact, and first and second combustion chambers accommodating therein gas generating agents which are ignited and burnt to generate a combustion gas, wherein
the first combustion chamber and the second combustion chamber are separated from each other by a partition wall, the first combustion chamber and the second combustion chamber are brought into communication with each other only through a communication hole formed in the partition wall, a combustion gas generated in the second combustion chamber flows into the first combustion chamber from the communication hole and then, is discharged from the gas discharge hole,
a volume ratio of the first combustion chamber and the second combustion chamber is adjusted in the range of 1/1 to 9/1 by the partition wall, and a combustion state of a gas generating agent in the second combustion chamber is controlled by the communication hole.

According to the present invention, the same effects as those of the above inventions are obtained. In the present invention also, it is possible to add the subject matters of the above inventions.

It is generally considered that the above invention has poor ignitability. It is preferable when a gas generating agent having a low combustion temperature, e.g., in the range of 1000 to 1700°C is used.

According to the gas generator for an air bag of the present invention, even if a gas generating agent having poor ignitability having a low combustion temperature is used for reducing an amount of gas such as NOx generated during operation, the same ignitability as the case in which a gas generating agent having a high combustion temperature and excellent ignitability is used can be secured because of the improvement of the structure of the gas generator.

Therefore, it is possible to reduce the amount of NOx generated during the operation, to secure the reliability of operation and to reduce the gas generator in size.

### Brief Description of the Drawings

Fig. 1 is an axial sectional view of a gas generator for an air bag which is suitable for a first embodiment;
Fig. 2 is a schematic plan view for explaining a layout of a second transfer charge in Fig. 1;
Fig. 3 is a schematic sectional view of another embodiment shown in Fig. 2;
Fig. 4 is an axial sectional view of a gas generator for an air bag which is suitable for a second embodiment;
Fig. 5 is an axial sectional view of a gas generator for an air bag which is suitable for a third embodiment; and
Fig. 6 shows a combustion internal curve of a gas generator in a 60-liter tank internal combustion test using the gas generator for an air bag shown in Fig. 1.

### Explanation of Symbols

- 10: gas generator for air bag
- 11: housing
- 15: inner cylinder
- 20: first combustion chamber
- 25: second combustion chamber
- 31: first igniter
- 32: second igniter
- 35: first transfer charge
- 36: second transfer charge
- 45: aluminum cap
- 46: flame-transferring holes
- 52: second through-hole
- 65: filter

### Embodiments of the Invention

### (1) First Embodiment

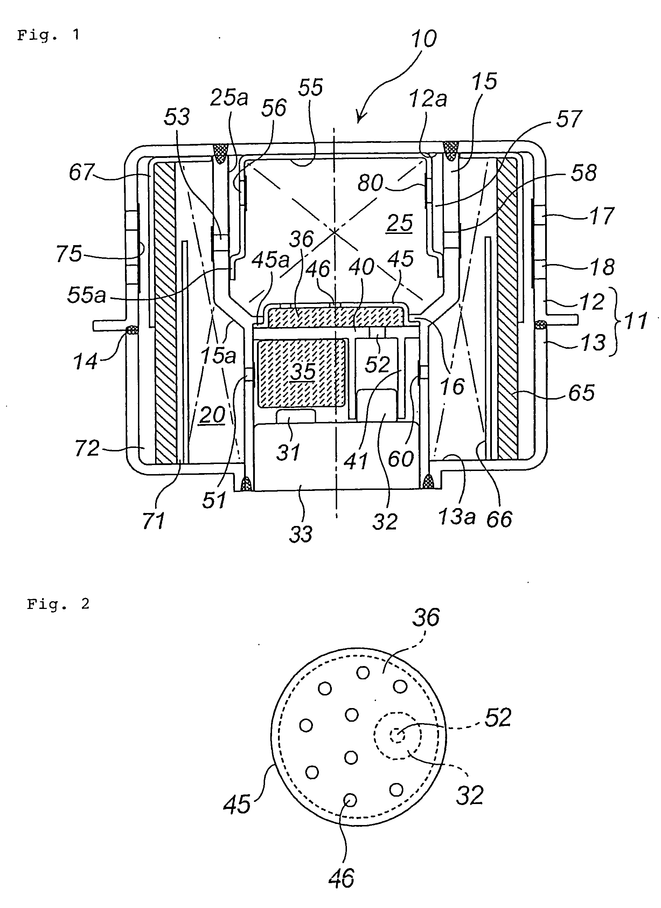

Embodiments of the present invention will be explained with reference to the drawings. Fig. 1 is an axial sectional view of a gas generator for an air bag of the present invention. In the following description, a vertical relationship such as "upper" or "lower" is indicated with reference to Fig. 1, "the axial direction" means the axial direction of a housing, and "the radial direction means" the radial direction of the housing. In a gas generator 10, an outer shell container is formed of a housing 11. The housing 11 is formed by bonding a diffuser shell 12 to a closure shell 13. The diffuser shell 12 and the closure shell 13 form an inner accommodating space. The diffuser shell 12 and the closure shell 13 are welded to each other at a welded portion 14. In Fig. 1, other black portions are indicated as also welded portions.

The diffuser shell 12 is provided with a necessary number of gas discharge ports 17 and 18. Diameters of the gas discharge ports 17 and 18 may be the same or different.

A substantially cylindrical inner cylinder 15 is disposed in the housing 11. The inner cylinder 15 functions as a partition wall which divide the housing 11 into a first combustion chamber 20 and a second combustion chamber 25. An upper end edge of the inner cylinder 15 is joined to a ceiling surface 12a of the diffuser shell 12, a lower end edge of the inner cylinder 15 is joined to a bottom surface 13a of the closure shell 13, thereby separating the first combustion chamber 20 and the second combustion chamber 25 from each other.

The inner cylinder 15 is increased radially at an inclined wall portion 15a so that an inner diameter of an upper portion of the inner cylinder 15 (in the ceiling surface 12a side) becomes larger than an inner diameter of a lower portion of the inner cylinder 15 (in the bottom surface 13a side). At that time, the inclined wall portion 15a may be reduced in the radial direction.

By setting the shape of the inner cylinder 15 as shown in Fig. 1 in this manner, the volume ratio of the first combustion chamber 20 and the second combustion chamber 25 can easily be changed while maintaining the height of the gas generator 10 at low level (i.e., while achieving the size reduction) in accordance with requirement of output change of the gas generator. The volume ratio of the first combustion chamber 20 and the second combustion chamber 25 can be changed in the range of 1/1 to 9/1, preferably 3/2 to 8/2.

It is possible to appropriately adjust amounts, compositions, shapes and the like of the first gas generating agent and the second gas generating agent in correspondence with the change in volume ratio of the first combustion chamber 20 and the second combustion chamber 25, or reversely, it is possible to appropriately adjust the volume ratio of the first combustion chamber 20 and the second combustion chamber 25 in correspondence with the amounts, compositions, shapes and the like of the first gas generating agent and the second gas generating agent.

By changing the shape (diameter) of the inner cylinder 15 and adjusting the volume ratio of the first combustion chamber 20 and the second combustion chamber 25 in this manner, when, in particular, a gas generating agent having a low combustion temperature (e.g., 1000 to 1700°C) is used, it is possible to increase an internal pressure at the time of inflation of the air bag to the same value as that of a case in which a gas generating agent having a high combustion temperature (1700 to 3000°C) is used.

An annular (or cylindrical) first combustion chamber 20 is provided in an outer space of the inner cylinder 15, and the first gas generating agent (not shown) is accommodated therein.

The second combustion chamber 25 in which the second gas generating agent (not shown) is accommodated is provided in an upper space in the inner cylinder 15. An ignition means chamber in which two ignition means are accommodated is provided in a lower space in the inner cylinder 15.

A first igniter 31 and a first transfer charge 35 are disposed in the first ignition means chamber. A second igniter 32 and a second transfer charge 36 are disposed in the second ignition means chamber. The first igniter 31 and the second igniter 32 are fixed to a single collar 33, and are mounted in parallel to each other in the radial direction. When an air bag module including the gas generator 10 is mounted to a vehicle, the first igniter 31 and the second igniter 32 are connected to a power supply (battery) through a connector and a lead wire.

A vertical space in the inner cylinder 15, i.e., a space between the second combustion chamber 25, and the first igniter 31 and the second igniter 32 is divided by a flat plate-like partition wall 40 having a skirt portion 41 and a second through-hole 52. The flat plate-like partition wall 40 is fitted into the stepped notch 16 of the inner cylinder 15 from the below thereof and thus, even when the first igniter 31 is activated, the flat plate-like partition wall 40 is prevented from moving upward by a pressure caused at the time of activation. An inner diameter of the skirt portion 41 is set substantially the same as a diameter of the igniting portion of the igniter 32, and the skirt portion 41 comes into close contact with the igniting portion and surrounds the same. Therefore, flame generated by activation of the second igniter 32 moves straight only toward the second through hole 52.

By disposing the flat plate-like partition wall 40 having the skirt portion 41, the second combustion chamber 25 and the two igniters are separated, and the first igniter 31 and the second igniter 32 are separated. Therefore, ignition energy (flame, combustion gas or the like) generated by the activation of the first igniter 31 is prevented from entering the second ignition means chamber and from entering the second combustion chamber 25 through the second through-hole 52.

A first transfer charge 35 charged into an aluminum cap is disposed directly above the first igniter 31. First through-holes 51 formed in lower portion of side wall of the inner cylinder 15 bring the first combustion chamber 20 and the first ignition means chamber into communication with each other. Each the first through-hole 51 is formed at positions substantially exactly opposite to the center of the first transfer charge 35. The advancing direction of flame generated by the activation of the first igniter 31 is not exactly opposite to the first through hole 51. An aluminum or stainless seal tape 60 is pasted on the first through hole 51 from the inside.

The first through hole 51 and the first transfer charge 35 are exactly opposite to each other in this manner. Thus, when the first igniter 31 is activated, the entire first transfer charge 35 is burnt substantially uniformly.

Further, since the first through-hole 51 is formed in the lower portion of the inner cylinder 15, the ignition energy generated by combustion of the first transfer charge 35 is discharged in the radial direction and then, the direction of the ignition energy is changed to the upward direction and the energy flows out. Therefore, the ignitability of the entire first gas generating agent accommodated in the first combustion chamber 20 is enhanced.

The layout of the second transfer charge 36 will be explained with reference to Fig. 2. Fig. 2 is a plan view showing the layout of the second transfer charge 36.

The second transfer charge 36 is disposed above the second igniter 32 and on the flat plate-like partition wall 40. The second transfer charge 36 is charged into an aluminum cup 45 having plural flame-transferring holes 46.

The aluminum cap 45 holds the second transfer charge 36 accommodated in the aluminum cap 45. An opening peripheral edge of the cup 45 is formed with a flange 45a extending in the radial direction. The cup 45 is fixed in such a manner that the flange 45a is sandwiched between the stepped notch 16 and the flat partition wall 40 from the above and below. Due to such a fixing structure, when the first and second transfer charges are burnt, the cup 45 is prevented from moving or being detached. As a result, the flame from the igniter 32 can reliably be introduced to the entire second transfer charge 36 and thus, the ignitability of the second transfer charge 36 can be enhanced.

Plural flame-transferring holes 46 formed in the aluminum cap 45 are not exactly opposite to the advancing direction (directly above the second igniter 32) of flame generated by the activation of the second igniter 32.

By setting the positions of the flame-transferring holes 46 in this manner, when the second igniter 32 is activated and the generated flame advances in the directly upper direction, the flame is not discharged from the flame-transferring holes 46 as it is, the second transfer charge 36 is first ignited and burnt, and ignition energy generated by the combustion of the entire second transfer charge 36 is discharged into the second combustion chamber 25 from the flame-transferring holes 46. Therefore, the flammability of the second gas generating agent accommodated in the second combustion chamber 25 is enhanced.

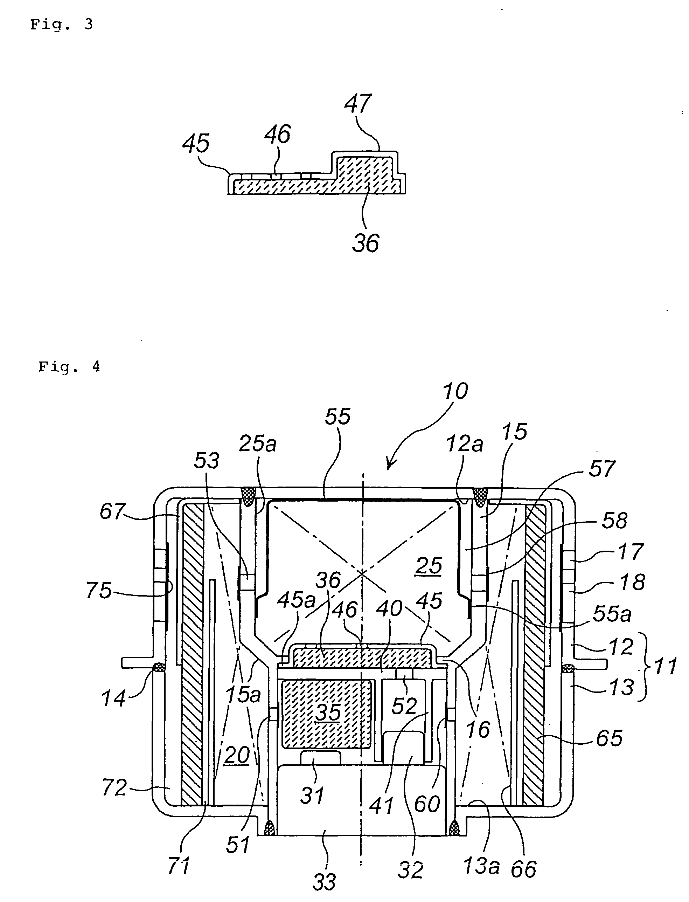

As shown in Fig. 3, the aluminum cap 46 in which the second transfer charge 36 is charged may have a projection 47 directly above the second igniter 32. By providing the aluminum cap 46 with the projection 47, since the charging amount of the second transfer charge 36 is increased, the ignitability of the second gas generating agent is further enhanced. Even if the aluminum cap 46 has the projection 47 as shown in Fig. 3, the aluminum cap 46 is provided at its flat surface except the projection 47 with the flame-transferring holes 46.

A cylindrical retainer with a bottom 55 is fitted into the second combustion chamber 25 such that an opening portion of the retainer 55 is directed downward, and an inner wall 25a of the second combustion chamber 25 is pressed against the side wall tip end 55a so that the retainer 55 is fixed. A gap 57 is provided between a side wall of the retainer 55 and the inner wall 25a of the second combustion chamber 25. The gap 57 has such a size that a gas passage can be secured.

The retainer 55 is provided at its side wall with plural openings 56 (nozzles). The height of the opening portions 56 in the axial direction is higher than the height of a third through-hole 53 formed in the inner cylinder 15.

The third through-hole 53 is closed with a stainless seal tape 58 from the outside, and the opening portions 56 may be closed with aluminum or stainless seal tapes 80 from the inside. In case of closing the opening portions 56 with the seal tapes 80, when combustion in the first combustion chamber 20 and combustion in the second combustion chamber 25 are started at the same time by the simultaneous activation of the two ingiters, the internal pressure in the second combustion chamber 25 is temporarily increased and thus, the ignitability in the second gas generating agent is enhanced.

Since the gap 57 is provided between the side wall of the retainer 55 and the inner wall 25a of the second combustion chamber 25, the third through-hole 53 is prevented from being closed with the second gas generating agent. If the third through-hole 53 is closed with the second gas generating agent, the internal pressure in the second combustion chamber 25 is excessively increased at the initial stage of combustion, and when the second gas generating agent which closes the third through-hole 53 is burnt, the third through-hole 53 is opened and thus the internal pressure therein is abruptly reduced, and therefore, there is an adverse possibility that stable flammability is deteriorated.

By adjusting the height of each of the opening portions 56 and the third through-hole 53, even if the third through-hole 53 is located at lower sides of the second combustion chamber 25 as shown in Fig. 1, a gas generated by combustion of the second gas generating agent passes through the opening portions 56 located at upper sides of the second combustion chamber 25 and then is discharged from the third through-hole 53. Therefore, flame well runs in the second combustion chamber 25 entirely, and the flammability of the second gas generating agent is enhanced.

The gross opening area of the third through-hole 53 is set smaller than the gross opening area of the opening portions 56, and is set smaller than the gross opening area of the gas discharge holes 17 and 18.

When the first igniter 31 is first activated and the second igniter 32 is activated later, that is, when the first gas generating agent in the first combustion chamber 20 is first burnt and the second gas generating agent in the second combustion chamber 25 is burnt with delay, the pressure in the second combustion chamber 25 becomes sufficiently higher than the pressure in the first combustion chamber 20. For this reason, if the gross opening area of the third through-hole 53 is set as described above, the flow-out speed of the combustion gas from the second combustion chamber 25 is controlled by the third through-hole 53 and thus, the internal pressure in the second combustion chamber 25 at the time of combustion is also controlled by the third through-hole 53. Thus, the combustion state in the second combustion chamber 25 is controlled by the third through-hole 53. When the first igniter 31 and the second igniter 32 are activated at the same time, a difference in pressure between the first combustion chamber 20 and the second combustion chamber 25 becomes small and thus, the internal pressure in the second combustion chamber 25 is still higher, but the influence of pressure control by the third through-hole 53 becomes small.

By controlling the combustion state of the second combustion chamber 25 by the third through-hole 53, the following effect can be obtained.

When only the first igniter 31 is activated and only the first gas generating agent is allowed to burn such as a case in which an automobile collides at a low speed, provided that a remaining second gas generating agent is left as it is, it is risky when the automobile is disassembled. For this reason, the second igniter 32 is activated after the activation of the first igniter 31 by 100 milliseconds to ignite and burn the second gas generating agent in some cases. In such a case, if the combustion state of the second combustion chamber 25 can be controlled by the third through-hole 53, the ignitability and flammability of the second gas generating agent are enhanced and NOx or the like is restrained from being generated, which is preferable. Besides, if the generation time of the combustion gas from the second combustion chamber 25 is elongated, a requirement to elongate the inflation-maintaining time of the air bag can also be satisfied.

A cylindrical filter 65 is disposed between the first combustion chamber 20 and a peripheral wall of the housing 11 (diffuser shell peripheral wall 12b and closure shell peripheral wall 13b) for removing combustion residue from the combustion gas and for cooling the combustion gas.

An inner cylindrical shielding plate 66 is disposed inside the cylindrical filter 65. A gap (first gap 71) is provided between the cylindrical filter 65 and the inner cylindrical shielding plate 66. In this case, instead of the gap, a portion (a portion having approximately the same width as the gap) of the inner cylindrical shielding plate 66 coming in contact with the cylindrical filter 65 is formed in a coarse structure so that a state similar to the case that the gap is provided may actually be achieved.

An outer cylindrical shielding plate 67 is disposed at an outer side of the cylindrical filter 65 in a state in which the outer cylindrical shielding plate 67 is in contact with an outer peripheral surface of the cylindrical filter 65. A gap (second gap 72) is provided between the outer cylindrical shielding plate 67 and a peripheral wall of the housing 11. It is preferable that the width of the second gap 72 is set wider than that of the first gap 71.

The inner cylindrical shielding plate 66 and the outer cylindrical shielding plate 67 do not cover the entire surface of the cylindrical filter 65 as shown in Fig. 1.

The inner cylindrical shielding plate 66 covers a lower portion of the cylindrical filter 65 (in the height range of about 1/2 to 2/3 of the entire height of the cylindrical filter 65) in a state in which one end peripheral edge abuts against the bottom surface 13a. The same state as shown in Fig. 1 may be obtained by first covering the entire surface of the filter 65 with the inner cylindrical shielding plate 66 and providing at a portion of the filter 65 with plural vent holes.

The outer cylindrical shielding plate 67 covers an upper portion of the cylindrical filter 65 (in the height range of about 1/2 to 2/3 of the entire height of the cylindrical filter 65) in a state in which one end peripheral edge abuts against the ceiling surface 12a. The same state as shown in Fig. 1 may be obtained by first covering the entire surface of the filter 65 with the outer cylindrical shielding plate 67 and providing at a portion of the filter 65 with plural vent holes.

By disposing the cylindrical filter 65, the inner cylindrical shielding plate 66 and the outer cylindrical shielding plate 67 in this manner, the filtering effect (filtering of the combustion residue) and cooling effect of the combustion gas are further enhanced. The combustion gas generated in the first combustion chamber 20 and the second combustion chamber 25 enters the cylindrical filter 65 from a portion which is not covered with the inner cylindrical shielding plate 66, part of the combustion gas moves in the cylindrical filter 65 in the axial direction as it is and reaches the second gap 72, ruptures the seal tape (aluminum or stainless) 75 and then, is discharged from the gas discharge ports 17 and 18. The remaining part of the combustion gas moves through the first gap 72 and then passes through the cylindrical filter 65 in the radial direction and reaches the second gap 72, and is discharged from the gas discharge ports 17 and 18.

The seal tapes 75 which close the gas discharge ports 17 and 18 may be ruptured at the same time or only part of the gas discharge ports 17 and 18 may be ruptured depending upon the activation state of the igniters (only one of the igniters is activated, or both igniters are activated at the same time or the igniters are activated with time lag).

Next, the operation when the two igniters are activated with time lag in the gas generator 10 for the air bag will be explained.

If the first igniter 31 is activated, the transfer charge 35 is ignited and burnt, the ignition energy ruptures the seal tape 60 and the ignition energy passes through the first through-hole 51 and discharged into the first combustion chamber 20. At that time, the ignition energy is discharged in the radial direction and then is moved in the first combustion chamber 20 upward. Therefore, the ignitability and the flammability of the first gas generating agent are excellent. Since the third through-hole 53 is closed with the stainless seal tape 58, the combustion gas in the first combustion chamber 20 does not flow into the second combustion chamber 25.

The combustion gas generated in the first combustion chamber 20 ruptures part or the whole of the seal tape 75 by a combination of the inner cylindrical shielding plate 66, the cylindrical filter 65 and the outer cylindrical shielding plate 67 and functions of the first and second gaps 71 and 72, and the combustion gas is discharged from a part or all of the gas discharge ports 17 and 18 to inflate the air bag.

With a slight time lag, the second igniter 32 is activated. At that time, the flame advances straight through the second through-hole 52 but since the advancing direction of the flame and the flame-transferring holes 46 are not exactly opposite to each other, the ignition energy is discharged into the second combustion chamber 25 from the flame-transferring holes 46 after all the second transfer charge 36 charged into the aluminum cup 45 is ignited and burnt.

Since the ignition energy enters, the second gas generating agent in the second combustion chamber 25 is ignited and burnt. Since the height positions of the opening portions 56 of the retainer 55 and the third through-hole 53 are adjusted as described above, the flame runs through the entire second combustion chamber 25 excellently, and the ignitability and the flammability of the second gas generating agent are excellent. Further, when the opening portions 56 are closed with the seal tapes 80, the above-described effect is obtained.

A gas generated in the second combustion chamber 25 is discharged from the third through-hole 53 in the radial direction and flows into the first combustion chamber 20 and then discharged from the gas discharge ports 17 and 18 through the cylindrical filter 65 to further inflate the air bag.

In the above operation, for example, when the output by the first gas generating agent or the second gas generating agent accommodated in the first combustion chamber 20 or the second combustion chamber 25 is small (e.g., when a gas generating agent having a low combustion temperature is used), the internal pressure at the time of combustion can be adjusted by adjusting the volume ratio of the first combustion chamber 20 or the second combustion chamber 25 and increasing or reducing the charging amount of the gas generating agent. Therefore, the flammability of the first gas generating agent or the second gas generating agent is not deteriorated, and sufficient internal pressure when the air bag is inflated can be secured.

### (2) Second Embodiment

Next, another embodiment will be explained with reference to Fig. 4. Fig. 4 is an axial sectional of a gas generator for an air bag. The gas generator for an air bag shown in Fig. 4 is different from that shown in Fig. 1 in partial constituent elements (gas discharge ports 17, 18 and retainer 55) in the drawings (e.g., outer appearance), but, since the different constituent elements in the drawings have the same functions, all of such elements are designated with the same numbers. The different constituent elements in the drawing will mainly be explained below, and explanation concerning the same constituent elements in the drawing will be omitted in principle.

The first combustion chamber 20 and the second combustion chamber 25 are separated from each other by the inner cylinder (separating means) 15, and the entire side wall of the second combustion chamber 25 is included in the first combustion chamber 20.

The first combustion chamber 20 and the second combustion chamber 25 are in communication with each other through plural third through-holes (communication holes) 53 formed in the inner cylinder (separating means) 15. The plural third through-holes (communication holes) 53 are closed with stainless seal tapes 58 from outside.

A gross opening area (opening area per one communication hole × the number of communication holes) of the communication holes 53 is set such that the gross opening area is in correlation with the entire surface area of the second gas generating agent. By setting the gross opening area in this manner, when the impact of collision is small, the air bag is developed by combustion of only the first gas generating agent, and in order to burn second gas generating agent completely, when the second igniter 32 is activated with time delay of about 100 msec after the first igniter 31 is activated, the combustion of the second gas generating agent can be adjusted by the communication holes 53 and thus, it is possible to prevent gas component such as NOx from being generated due to lack of pressure.

The charging amounts, compositions, composition ratios, combustion temperatures, amounts of gas to be generated per unit weight, shapes and sizes of the first gas generating agent and the second gas generating agent may be the same or different from each other. When the entire surface area of the gas generating agent and the gross opening area of the communication holes 53 (or later-described gas discharge ports 17 and 18) are correlated with each other, it is preferable that it is determined while taking these elements into consideration.

The retainer 55 made of wire mesh (e.g., stainless wire mesh) is disposed in the second combustion chamber 25. The third through-hole (communication hole) 53 and the second gas generating agent are separated by the retainer 55 so that the third through-hole 53 and the second gas generating agent do not come into contact with each other.

The retainer (wire mesh) 55 has the same shape as the retainer shown in Fig. 1, and is disposed in the same manner. Further, when the wire mesh is used as the retainer 55, in order to enhance the gas flow to the communication hole 53, a gap may be formed between a bottom of the retainer 55 and the ceiling surface 12a.

The wire mesh may be a plain dutch wire mesh, twilled dutch wire mesh or the like, and the size of the mesh is set in such a range that a gas generated by combustion of the second gas generating agent can smoothly flow and the second gas generating agent does not leak from the mesh. The gross opening area of the mesh is set larger than the gross opening area of the communication hole 53.

The wire mesh is not limited to the shape shown in Fig. 4, opposite ends of the wire mesh may be opened and widened portions 55a may be provided on opposite ends. A porous punching metal or expanded metal may be used instead of the wire mesh.

When the retainer (wire mesh) 55 does not exist, the second gas generating agent comes into contact with the communication hole 53. Thus, a gas generated by the second gas generating agent which started the initial combustion in the vicinity of the flame-transferring holes 46 by the ignition energy discharged from the flame-transferring holes 46 is prevented from flowing smoothly toward the first combustion chamber 20 by the unburnt second gas generating agent which closes the communication hole 53, but this problem is not caused in this embodiment.

The diffuser shell 12 forming the housing 11 is formed with the gas discharge ports 17 and 18 having different diameters. An opening diameter of the gas discharge port 18 is greater than that of the gas discharge port 17.

The gas discharge ports 17 and 18 are closed with seal tapes (shielding members) 75. The seal tapes 75 are set such that the tapes are ruptured in many stages after the gas generator for an air bag is activated, by applying the method (1).

The seal tapes 75 may be set such that the tapes are ruptured in many stages after the gas generator for an air bag is activated, by applying the methods (4) and (5).

In the method (4), when the entire surface area of the first gas generating agent (gas generating agent which is burnt first) is defined as (A1) and the gross opening area of the gas discharge ports is defined as (At1), it is preferable that A1/At1 = 300 to 1300, and more preferably 450 to 1000.

In the method (5), when the entire surface area of the second gas generating agent (gas generating agent which is burnt later) is defined as (A2) and the gross opening area of the gas discharge ports is defined as (At2), it is preferable that A2/At2 = 700 to 1300, and more preferably 800 to 1000.

In Fig. 4, when a length (height) of the housing 11 in the axial direction and a length (diameter) thereof in the radial direction are compared, they are substantially the same or the length is larger. Therefore, the housing 11 is suitable for a gas generator for an air bag mounted to the passenger side of a vehicle. The housing 11 may have a shape which is longer in the radial direction so that the gas generator for an air bag is suitable for the driver side of the vehicle. In that case, the inner cylindrical shielding plate 66 and the outer cylindrical shielding plate 67 can be omitted.

Next, the two igniters activated with time delay in the gas generator 10 for an air bag will be explained.

The first igniter 31 is activated, the transfer charge 35 is ignited and burnt, the ignition energy ruptures the seal tape 60, the ignition energy passes through the first through-hole 51 and discharged into the first combustion chamber 20 to burn the first gas generating agent.

The combustion gas generated in the first combustion chamber 20 ruptures only part of the seal tape 75 by the combination of the inner cylindrical shielding plate 66, the cylindrical filter 65 and the outer cylindrical shielding plate 67, and further function of the first gap 71 and the second gap 72 as described above, the ignition energy is discharged from part or all of the a gas discharge ports 18 having large opening diameters to inflate the air bag. At that time, a gas discharge ports 17 having small opening diameters are not opened.

The second igniter 32 is activated with a slight time lag, the second transfer charge 36 is ignited and burnt and then, the ignition energy is discharged into the second combustion chamber 25 from the flame-transferring holes 46.

If the ignition energy enters, the second gas generating agent in the second combustion chamber 25 is ignited and burnt. At that time, the flammability of the second combustion chamber 25 is adjusted by the communication hole 53. Further, since the retainer (wire mesh) 55 and the communication hole 53 are not in contact with each other, the outflow of the combustion gas is not hindered.

A gas generated in the second combustion chamber 25 is discharged from the third through-hole 53 in the radial direction, and flows into the first combustion chamber 20. Then, the gas passes through the cylindrical filter 65 and ruptures the remaining seal tapes 75, and the gas is discharged from the gas discharge ports 17 and 18 to further inflate the air bag.

With the above operation, stable output can always be realized without generating a great difference in the internal pressure in the housing 11 at the time of combustion.

### (3) Third Embodiment

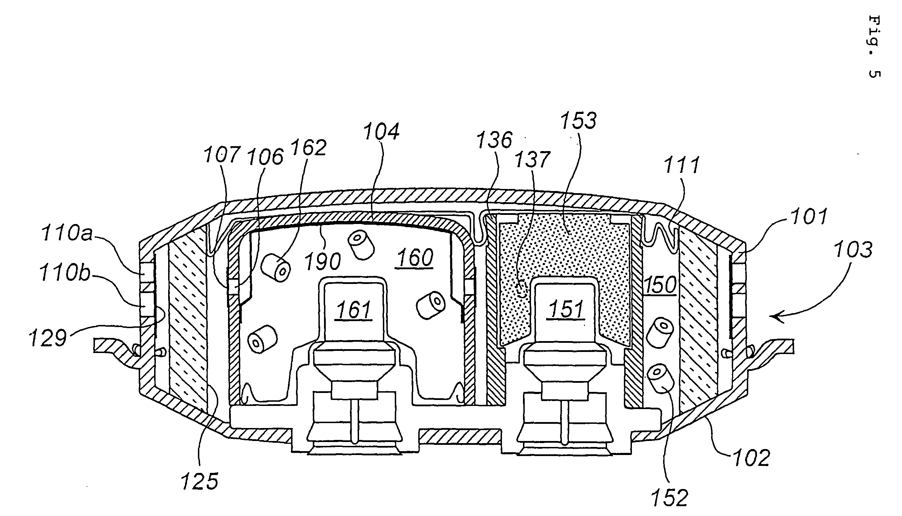

Next, another embodiment will be explained with reference to Fig. 5. Fig. 5 is an axial sectional view of a gas generator for an air bag. A basic structure shown in Fig. 5 is the same as that shown in Fig. 7 of JP-A No.2001-130368, and the structure in Fig. 5 is different from that shown in Fig. 7 in that the solving means of the present invention is added.

In the gas generator, an outer shell of the housing 103 comprises a diffuser shell 101 and a closure shell 102.

A peripheral wall of the diffuser shell 101 is formed with gas discharge ports 110a and 110b (opening diameter of the port 110b is larger than that of the port 110a) through which a combustion gas generated from the first gas generating agent 152 and the second gas generating agent 162 is introduced into the air bag. The ports 110a and 110b are closed with seal tapes (e.g., aluminum tapes) 129. A reference numeral 125 represents a filter.

The seal tapes (shielding member) 129 closing the gas discharge ports 110a and 110b are set such that the tapes are ruptured in many stages after the gas generator for an air bag is activated by applying any one of methods (1) to (3) and/or (4) and (5).

A first inner cylinder (separating means) 136 is disposed in the housing 103. A transfer charge 153 for igniting the first gas generating agent 152 and a first igniter 151 for igniting the transfer charge 153 are disposed in the inner cylinder 136. The first inner cylinder 136 is provided at its side wall with plural nozzles 137. The interior of the first inner cylinder 136 and the first combustion chamber 150 are in communication with each other through the nozzles 137. An upper opening of the first inner cylinder 136 is closed with a pressing member 111.

A second inner cylinder (separating means) 104 is further disposed in the housing 103. An interior of the inner cylinder 104 serves as the second combustion chamber 160, and an exterior of the inner cylinder 104 serves as the first combustion chamber 150 into which the first gas generating agent 152 is charged. The second combustion chamber 160 formed in the second inner cylinder 104 is enclosed in a state in which all of the peripheral wall and the ceiling wall of the second combustion chamber 160 (inner cylinder 104) exist in the first combustion chamber 150.

A second igniter 161 and a second gas generating agent 162 are disposed in the second inner cylinder 104, and a retainer (wire mesh) 190 having the same structure, shape, mounting state and function as those of the retainer (wire mesh) 55 shown in Fig. 4 is disposed in the second inner cylinder 104. A transfer charge having the same function as that of the transfer charge 137 may be disposed in the second combustion chamber 160 to ignite the second gas generating agent 162.

A peripheral wall of the second inner cylinder 104 is provided with a communication hole 106 which brings the second combustion chamber 160 and the first combustion chamber 150 into communication with each other. The communication hole 106 has the same function as that of the communication hole 53 shown in Fig. 4. The communication hole 106 is closed with a seal member (e.g., aluminum or stainless tape) 107. The seal member 107 is ruptured only when the second gas generating agent 162 is burnt, and is not ruptured by combustion of the first gas generating agent 152.

The gas generator for an air bag shown in Fig. 5 is operated in the same manner as that of the gas generator for an air bag shown in Fig. 4. Stable output can always be realized without generating a great difference in the internal pressure in the housing 103 at the time of combustion.

### Examples

### Examples 1 to 3

Using the gas generator shown in Fig. 1 (the wire mesh 55 shown in Fig. 4 was used instead of the retainer 55 shown in Fig. 1), a known 60-liter tank combustion test was carried out, and combustibility of the gas generating agent in the second combustion chamber was evaluated. Details of the gas generator shown in Fig. 1 are as follows:
(communication holes 53)

The following three kinds of communication holes 53 were used, and variation in combustion internal pressure in the second combustion chamber in each case was measured. Stainless tapes having a thickness (total thickness of metal layer and adhesive layer) of 50 µm were pasted on the communication holes 53.
Embodiment 1: φ3 mm × 4: gross opening area 0.28 cm² (equal disposition) (A/At = 809)
Embodiment 2: φ3 mm × 5: gross opening area 0.35 cm² (equal disposition) (A/At=648)
Embodiment 3: φ3 mm × 8: gross opening area 0.57 cm² (equal disposition) (A/At=397)
(gas discharge ports 17 and 18)
Gross opening area of gas discharge ports 17 and 18 > gross opening area of communication holes 53
(wire mesh 55)
Gross opening area of wire mesh 55 > gross opening area of communication hole 53
(gas generating agent in second combustion chamber 25)
· composition ratio: guanidine nitrate / basic copper nitrate / sodium salt of carboxymethyl cellulose/aluminum hydroxide = 40.71/49.29/5/5 (weight mole %)
· shape, size: single-perforated shape having outer appearance φ4.2 mm, inner diameter φ1.1 mm, and length 4.1 mm
· charging amount: 23 g (amount of gas generated: 0.64 mol)
· gross surface area: 226.7 cm²

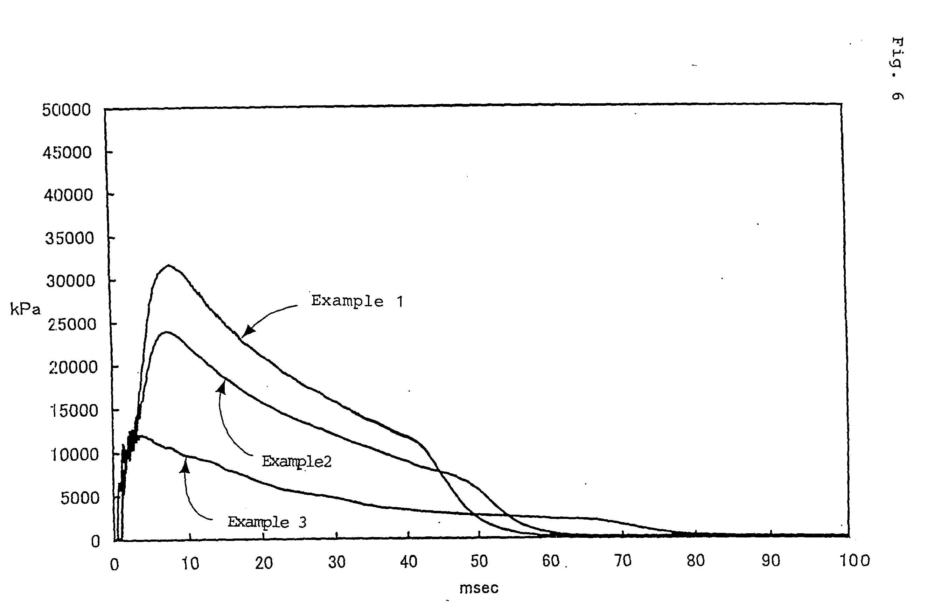

Fig. 6 shows variations in combustion pressure in the second combustion chamber 25 of the Embodiments 1 to 3. It can be confirmed from Fig. 6 that as the gross opening area of the communication hole 53 of the gas generator is smaller, the maximum combustion internal pressure is higher, and the combustion is completed within a shorter time.

Nitrogen element is included in the gas generating agent used in each of the Embodiments 1 to 3. When the gas generating agent is burnt under low pressure, NOx is prone to be generated, but if the combustion internal pressure in the second combustion chamber 25 is adjusted, the amount of NOx generated can be suppressed.

Thus, from the result shown in Fig. 6, it can easily be assumed that if the flow of gas generated from the second combustion chamber 25 is adjusted by the communication hole 53, i.e. , if the opening area is reduced to increase the combustion maximum internal pressure, the generation of NOx can be suppressed.

The results of the Embodiments 1 to 3 mean that when the collision impact is small and only the first gas generating agent is burnt and the second gas generating agent is allowed to be burnt with about 100msec delay for processing the gas generating agent, the generation of gas component such as NOx can be suppressed by adjusting the combustion of the second gas generating agent by means of the communication hole 53 of the inner cylinder 15 which forms the second combustion chamber. Even if part of the gas discharge ports 17 and 18 formed in the housing are closed with the seal tapes 75, a space of the first combustion chamber 20 exists, and thereby, a pressure caused by the combustion of the second gas generating agent spreads over the entire space in the housing 11, and the pressure is reduced. Therefore, this does not function to adjust the combustion pressure of the second gas generating agent.

From the above fact, it was confirmed that it was preferable to adjust the flammability of the gas generating agent in the second combustion chamber using the communication hole 53.

## Claims

1. A gas generator for an air bag comprising a housing having a gas discharge hole, first and second ignition means activated by the impact, and first and second combustion chambers accommodating therein gas generating agents which are ignited and burnt to generate a combustion gas, wherein
the first combustion chamber and the second combustion chamber are separated from each other by a partition wall, a volume ratio of the first combustion chamber and the second combustion chamber is adjusted in the range of 1/1 to 9/1 by the partition wall.

2. A gas generator according to claim 1, wherein an inner cylinder is disposed in the housing, an annular first combustion chamber is provided outside the inner cylinder, two ignition means are provided at the lower side in the inner cylinder and further, a second combustion chamber is provided at the upper side in the inner cylinder.

3. A gas generator for an air bag according to claim 2, wherein a diameter of the inner cylinder disposed in the housing varies at a vertical position in the axial direction of the housing.

4. A gas generator for an air bag according to claim 2 or 3, wherein a diameter of the inner cylinder disposed in the housing varies at a vertical position in the axial direction of the housing, and an upper portion of the inner cylinder is greater than a lower portion of the inner cylinder in diameter.

5. A gas generator for an air bag comprising a housing having a gas discharge hole, first and second ignition means activated by the impact, and first and second combustion chambers accommodating therein gas generating agents which are ignited and burnt to generate a combustion gas, wherein
the first combustion chamber and the second combustion chamber are separated from each other by separating means having a communication hole, the second combustion chamber is disposed such that it is enclosed by the first combustion chamber,
flammability of the second combustion chamber is adjusted by the communication hole.

6. A gas generator for an air bag according to claim 5, wherein a retainer is disposed in the second combustion chamber, the communication hole and the gas generating agent are separated from each other by the retainer such that the communication hole and the gas generating agent do not come into contact with each other.

7. A gas generator for an air bag according to claim 6, wherein the retainer is a wire mesh.

8. A gas generator for an air bag according to any one of claims 5 to 8, wherein the number of gas discharge ports formed in the housing is two or more, the gas discharge ports are closed with shielding members before the gas generator is activated, the shielding members are ruptured in many stages after the gas generator is activated.

9. A gas generator for an air bag comprising a housing having a gas discharge hole, first and second ignition means activated by the impact, and first and second combustion chambers accommodating therein gas generating agents which are ignited and burnt to generate a combustion gas, wherein
the first combustion chamber and the second combustion chamber are separated from each other by a partition wall, the first combustion chamber and the second combustion chamber are brought into communication with each other only through a communication hole formed in the partition wall, a combustion gas generated in the second combustion chamber flows into the first combustion chamber from the communication hole and then, is discharged from the gas discharge hole,
a volume ratio of the first combustion chamber and the second combustion chamber is adjusted in the range of 1/1 to 9/1 by the partition wall, and a combustion state of a gas generating agent in the second combustion chamber is controlled by the communication hole.

10. A gas generator for an air bag according to any one of claims 1 to 9, wherein a combustion temperature of the gas generating agent is 1000 to 1700°C.
